# FASCICULE DE BREVET EUROPEEN

(11) **EP 2 182 317 B1**
(45) Date de publication et mention de la délivrance du brevet: **25.04.2012**
(21) Numéro de dépôt: 09290782.3
(22) Date de dépôt: 14.10.2009
(51) Int. Cl.: F41H 7/03, B60H 1/26, B60H 1/00, B60H 1/30

(54) **Dispositif de protection d'un véhicule contre les projections de fluides**
Vorrichtung zum Schutz eines Fahrzeuges gegen einen Flüssigkeitsstrahl
Device for protecting a vehicle against fluid projections

(30) Priorité: 28.10.2008 FR 0806020
(43) Date de publication de la demande: 05.05.2010
(73) Titulaire: NEXTER Systems, 42328 Roanne (FR)
(72) Inventeur: Vandenberg, Christophe, 18023 Bourges Cedex (FR)
(74) Mandataire: Célanie, Christian

(56) Documents cités:
- DE-A1- 4 228 865
- FR-A- 2 878 193

## Description

Le domaine technique de l'invention est celui des dispositifs permettant d'assurer la protection d'un véhicule contre les projections de fluides enflammés ou inflammables.

Les véhicules militaires utilisés en combat urbain sont relativement vulnérables à de telles projections.

En effet, les véhicules comportent généralement sur leurs parois supérieures des entrées d'air permettant la ventilation du moteur ou de l'habitacle. Une telle disposition de ces ouvertures en paroi supérieure est rendue nécessaire pour permettre notamment les passages à gué.

Cependant, du fait d'une telle disposition, un liquide enflammé qui est projeté sur le véhicule par un agresseur (par exemple sous la forme d'un cocktail "Molotov") peut pénétrer aisément au travers des entrées d'air.

Il en résulte une neutralisation de la motorisation si l'entrée d'air est une ouverture de ventilation moteur. Il peut en résulter une pénétration des flammes dans l'habitacle si l'entrée d'air est une ouverture d'aération.

Il n'est pas possible par ailleurs d'obturer totalement ces ouvertures sous peine de pénaliser la mobilité du véhicule (entrées d'air moteur) ou la survie de l'équipage (entrées d'air de ventilation de l'habitacle).

On connaît par exemple par le brevet US-2939366 un dispositif dans lequel on dispose un écran protecteur en matériau ininflammable au niveau d'une embrasure de passage d'une arme et on complète cette protection par un disperseur de dioxyde de carbone permettant d'éteindre les flammes dans l'espace séparant l'écran et la paroi du véhicule.

Une telle solution particulièrement complexe n'est pas adaptée à la protection des entrées d'air moteur ou habitacle. Il n'est en effet pas question de disperser un gaz tel que le dioxyde de carbone à ce niveau.

On connaît aussi par le brevet US7413024 un dispositif de protection pour les grilles d'aération de bâtiments, dispositif dans lequel une trappe de ventilation comporte un matériau assurant l'obturation totale en cas d'incendie.

Une telle solution n'est pas adaptée aux véhicules et en particulier aux véhicules militaires pour lesquels il est vital de maintenir une capacité de mobilité, donc de maintenir dans tous les cas une ventilation du moteur.

On connaît aussi par le brevet DE4228865, qui forme un point de départ pour le préambule de la revendication 1, un dispositif de protection qui comporte un volet d'obturation qui est prolongé par un rebord latéral perpendiculaire au volet. Ce dispositif est associé à une chicane / labyrinthe qui permet d'empêcher le passage des liquides enflammés sans interdire le passage de l'air. Un tel dispositif est de structure complexe. La présence d'une chicane impose la définition de moyens de fixation spécifiques permettant le positionnement du volet sur la chicane. Un tel dispositif n'est pas adapté à une mise en place ou un retrait rapide sur le terrain en fonction des contraintes opérationnelles.

L'invention a pour but de proposer un dispositif de protection de structure simple, facile et rapide à mettre en oeuvre. Ce dispositif permet d'assurer une protection efficace vis à vis des liquides inflammables projetés tout en pénalisant relativement peu les capacités opérationnelles du véhicule et notamment sa mobilité.

Ainsi, l'invention a pour objet un dispositif de protection d'un véhicule contre les projections de fluides enflammés ou inflammables, dispositif comportant, d'une part au moins un volet assurant la couverture d'une entrée d'air du véhicule, volet disposé à distance de l'entrée d'air et ménageant un espace pour le passage de l'air, et d'autre part des moyens permettant d'empêcher l'écoulement du fluide vers l'entrée d'air, dispositif caractérisé en ce que les moyens permettant d'empêcher l'écoulement du fluide vers l'entrée d'air comprennent au moins une paroi latérale solidaire du volet et dont le rebord externe se trouve à distance de l'entrée d'air, paroi latérale inclinée d'un angle inférieur à 90° par rapport au volet de façon à favoriser un écoulement du liquide à distance de l'entrée d'air.

Selon un mode de réalisation, le volet comporte des pieds latéraux positionnés à distance de l'entrée d'air et délimitant au moins un canal pour le passage de l'air.

Les pieds pourront être solidaires des parois latérales, le canal de passage pour l'air étant formé par au moins un ajourage réalisé sur chaque paroi inclinée.

Selon un autre mode de réalisation, le volet couvrant une entrée d'air pourra être constitué par au moins deux panneaux pouvant être positionnés l'un par rapport à l'autre de façon à assurer un masquage complet ou partiel de l'entrée d'air.

Selon un autre mode de réalisation de l'invention, plus particulièrement adapté à une entrée d'air située latéralement sur une cheminée disposée en saillie par rapport à une paroi du véhicule, le volet pourra être solidaire du sommet de la cheminée et comporter une ou des parois latérales inclinées qui l'entourent complètement tout en ménageant un espace E pour le passage de l'air, les moyens permettant d'empêcher l'écoulement du fluide vers l'entrée d'air comprenant par ailleurs des déflecteurs disposés à la base de la cheminée.

Les déflecteurs pourront être réalisés sous la forme de profilés entourant la base de la cheminée.

Selon d'autres caractéristiques : le volet et ses parois latérales pourront être réalisés en une matière plastique, le volet pourra comporter au moins une zone transparente.

Avantageusement, le volet pourra être rendu solidaire du véhicule par un moyen de fixation par sangles.

L'invention sera mieux comprise à la lecture de la description qui va suivre de différents modes de réalisation, description faite en référence aux dessins annexés et dans lesquels :
- la figure 1a est une vue latérale schématique d'un véhicule équipé d'un dispositif de protection selon un premier mode de réalisation,
- la figure 1b est une vue de dessus partielle du véhicule selon la figure 1a,
- la figure 1c est une coupe transversale du volet, coupe réalisée suivant le plan dont la trace AA est repérée sur la figure 1b,
- la figure 1d est une vue de dessus partielle d'une variante de réalisation,
- la figure 2b est une vue latérale schématique d'un véhicule équipé d'un dispositif de protection selon un deuxième mode de réalisation, dispositif représenté dans sa position déployée,

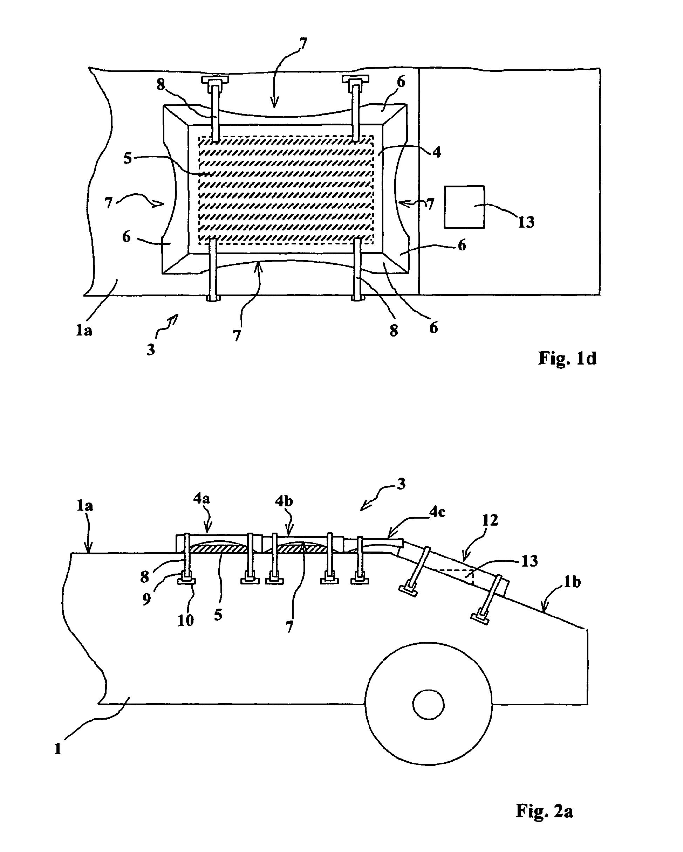

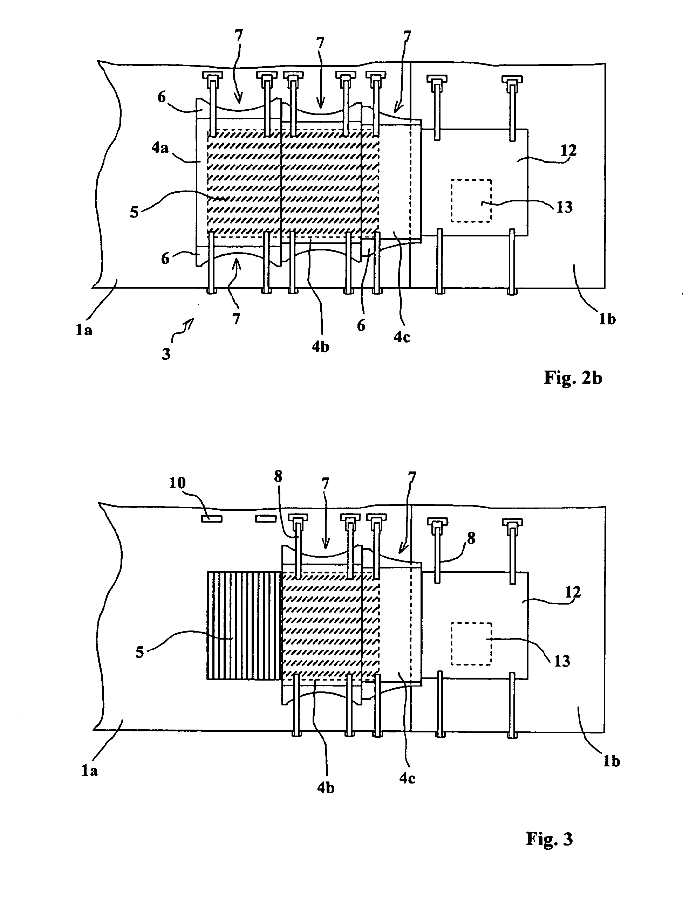

- la figure 2b est une vue de dessus partielle du véhicule selon la figure 2a,

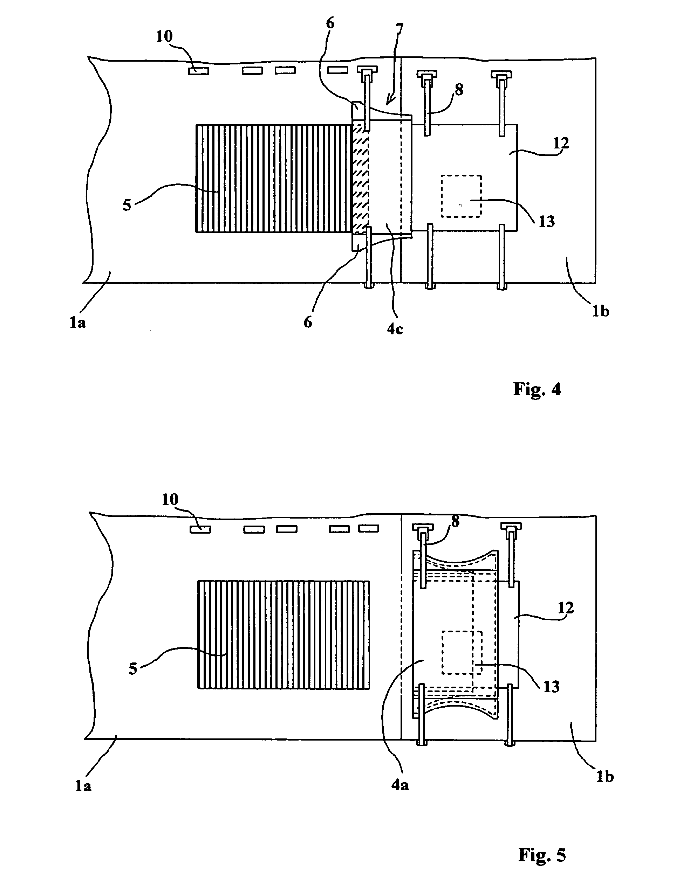

- les figures 3 et 4 montrent le dispositif selon la figure 2b suivant deux positions de déploiement partiel,
- la figure 5 montre le dispositif selon la figure 2b suivant sa position repliée,

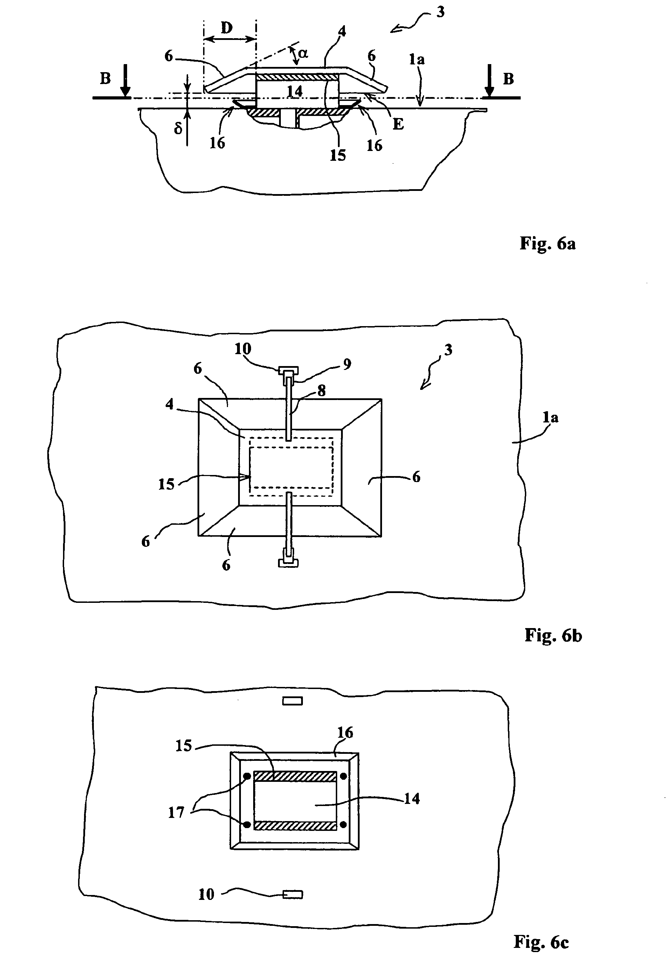

- la figure 6a est une vue latérale schématique d'un dispositif de protection selon un troisième mode de réalisation,
- la figure 6b est une vue de dessus du dispositif selon la figure 6a,
- la figure 6c est une vue en coupe de ce dispositif, coupe réalisée suivant le plan dont la trace BB est repérée à la figure 6a.

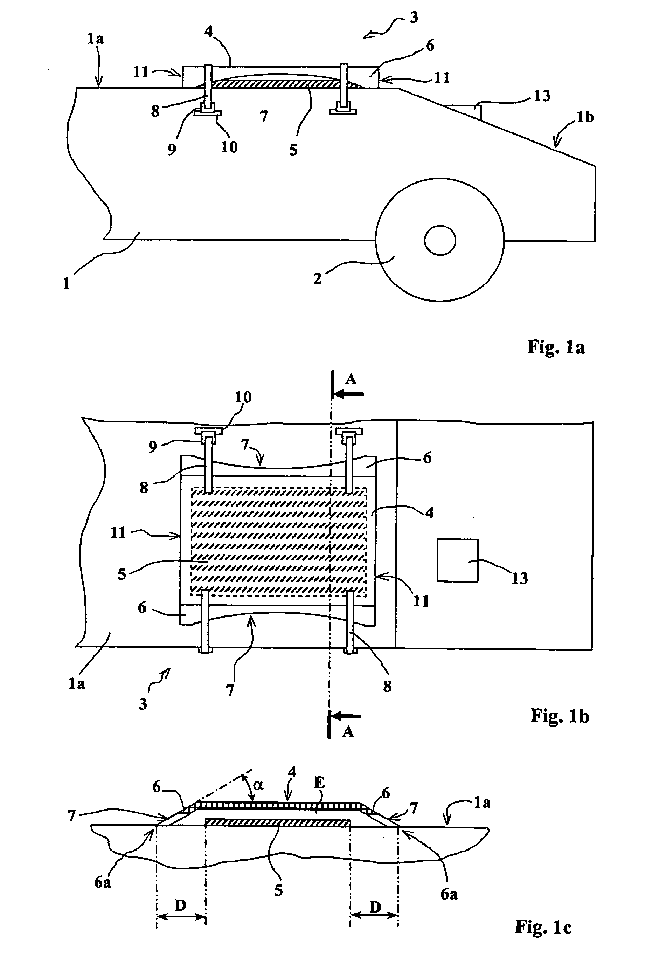

Les figures 1a, 1b et 1c montrent un véhicule 1 à roues 2 qui est équipé d'un dispositif de protection 3 contre les projections de fluides enflammés ou inflammables.

Suivant ce mode de réalisation le dispositif comprend un volet 4 qui assure la couverture d'une entrée d'air 5 du véhicule.

L'entrée d'air est ici une grille 5 d'admission d'air pour la motorisation du véhicule. Cette grille 5 est disposée sur une paroi horizontale 1a du véhicule 1.

La coupe 1c permet de préciser la forme du dispositif 3.

On voit que le volet 4 est disposé à distance de l'entrée d'air 5. Il existe donc un espace E entre volet 4 et grille 5 permettant le passage de l'air.

Par ailleurs, le volet 4 comporte deux parois latérales 6 qui sont solidaires du volet. Ces parois latérales 6 sont inclinées par rapport au volet 4. L'inclinaison des parois latérales est telle que le rebord externe 6a de ces parois latérales se trouve à distance D de la grille d'entrée d'air 5. L'angle α (figure 1c) entre le volet 4 et les parois latérales 6 est donc compris entre 0 et 90° et l'efficacité du dispositif sera d'autant plus grande que cet angle α sera faible (donc que la distance D sera grande).

L'inclinaison des parois latérales 6 permet de favoriser un écoulement du liquide inflammable à distance de l'entrée d'air 5.

Par ailleurs, les parois 6 portent chacune un ajourage 7 qui constitue un canal permettant le passage de l'air de l'extérieur vers l'espace E et la grille 5.

Suivant ce mode de réalisation, le volet 4 comporte ainsi quatre pieds latéraux formé par les parois 6, pieds qui sont positionnés à distance de la grille d'entrée d'air 5 et qui délimitent le canal 7 de passage de l'air.

Le volet portera enfin deux cloisons 11 perpendiculaires au volet 4 et qui sont appliquées sur la paroi horizontale 1a du véhicule.

Il serait bien entendu possible de former le canal de passage de l'air par plusieurs ajourages 7 ou par des perçages portés par les parois 6.

La surface du canal 7 de passage de l'air (ainsi que le volume de l'espace E) seront déterminés par l'Homme du Métier en fonction des besoins de la motorisation utilisant l'entrée d'air 5.

Ainsi, lorsqu'un liquide inflammable ou enflammé est projeté sur la paroi 1a du véhicule, le volet empêche l'entrée de ce liquide dans la grille d'aération 5. Les parois inclinées 6 constituent par ailleurs des moyens permettant d'empêcher l'écoulement du fluide vers la grille 5. Le liquide qui s'écoule sur le volet est en effet conduit à distance de la grille 5 par les parois 6.

Parallèlement, les ajourages 7 et l'espace E permettent d'assurer la fonctionnalité de la grille d'aération. La motorisation du véhicule peut donc toujours être opérationnelle même si les performances de ventilation réduite limitent quelque peu les capacités du véhicule.

Le volet 4 et ses parois latérales 6 seront de préférence réalisés en une matière plastique de façon à assurer au dispositif une masse réduite facilitant son emport.

Le dispositif peut alors être stocké aisément sur le véhicule avec les équipements de l'équipage.

Pour faciliter une mise en place rapide du dispositif on réalisera d'une façon préférée sa fixation au moyen de sangles 8. Les sangles 8 auront une de leurs extrémité solidaire de la paroi 4, par exemple soudée ou liée à un axe surmoulé à la paroi.

L'autre extrémité des sangles 8 portera un crochet 9 coopérant avec une patte de fixation 10 solidaire du véhicule, par exemple soudée sur celui ci.

Un moyen de réglage de la tension de la sangle 8 (non représenté) sera prévu. Un tel moyen est classique.

A titre de variante et pour améliorer la circulation de l'air vers l'entrée d'air 5, on pourra remplacer les cloisons 11 par deux autres parois inclinées 6 qui seront, elles aussi, dotées d'ajourages 7. La figure 1d montre en vue de dessus une telle variante.

Les figures 2a et 2b montrent un autre mode de réalisation de l'invention qui est plus particulièrement adapté à la protection de grilles d'entrée d'air 5 de grandes dimensions.

Suivant ce mode le volet est subdivisé en plusieurs panneaux 4a, 4b, 4c qui couvrent chacun une partie seulement de la grille 5. L'ensemble des panneaux du dispositif 3 assurant cependant la couverture de toute la grille 5.

Chaque panneau 4a, 4b, 4c porte des parois latérales inclinées 6 qui portent chacune un ajourage 7. Chaque panneau est par ailleurs fixé par ses propres sangles 8.

Bien entendu les panneaux se recouvrent mutuellement deux à deux de façon à éviter tout passage de liquide entre les panneaux. On pourra prévoir des joints d'étanchéité (non représentés) entre chaque panneau, les joints se trouveront comprimés lors du serrage des sangles 8.

Un autre avantage de ce mode de réalisation de l'invention est qu'il est possible de réaliser une couverture partielle de la grille 5.

Les figures 3 et 4 montrent ainsi deux exemples de déploiement partiel du dispositif. Sur la figure 3 deux panneaux 4b et 4c sont positionnés et sur la figure 4 seul le panneau 4c est positionné.

Il est possible ainsi lors de la préparation d'une mission en zone urbaine de prépositionner un ou deux panneaux. On maintient ainsi des capacités de mobilité supérieure en assurant une ventilation de bon niveau et on facilite et accélère la mise en place de la protection complète de la grille en cas de besoin puisqu'il suffira de positionner un nombre de panneaux plus réduit pour assurer cette protection complète.

On notera que, dans ce mode de réalisation comme dans le précédent, lorsque la grille 5 est complètement protégée, la ventilation reste assurée dans une certaine mesure grâce aux ajourages latéraux 7.

On remarque sur les figures 2a, 2b et 3 à 5 que l'on a également prévu un panneau de base 12 qui se trouve disposé sur une paroi inclinée (ou glacis) 1b du véhicule.

Ce panneau permet de recevoir les différents panneaux 4a, 4b, 4c dans une position repliée (figure 5). Ce prépositionnement permet d'accélérer la mise en place ultérieure des panneaux 4a,4b,4c sur la grille 5. Les dimensions des différents panneaux sont choisies pour permettre cette mise en place emboîtée ou gigogne.

Chaque volet comportera le cas échéant au moins une zone transparente. D'une façon préférée la matière plastique des volets sera choisie complètement transparente. Une telle disposition permet de maintenir les capacités d'observation au travers d'un épiscope 13 qui se trouve recouvert par le panneau de base 12 ainsi que (en position repliée) par les autres panneaux coulissants 4a, 4b et 4c.

Bien entendu un tel besoin dépend des contraintes d'intégration du véhicule. Si aucun épiscope ne se trouve à proximité de la ou des grilles 5 à obturer le besoin de transparence n'est plus nécessaire.

Les figures 6a, 6b et 6c montrent un troisième mode de réalisation de l'invention.

Ce mode est plus particulièrement adapté à la protection d'une entrée d'air 14 qui est située latéralement sur une cheminée 15 disposée en saillie par rapport à une paroi 1a du véhicule.

Le volet 4 est alors solidaire du sommet de la cheminée 15 et il comporte ici quatre parois latérales inclinées 6 qui l'entourent complètement.

Comme dans le mode de réalisation précédent, les parois latérales sont inclinées par rapport au volet d'un angle α qui est compris entre 0 et 90°. Les extrémités externes des parois latérales 6 se situent donc à une distance D de l'entrée d'air 14. Par ailleurs ces extrémités externes s'étendent jusqu'à une distance δ de la paroi 1a du véhicule. Les valeurs de D et de δ seront choisies de façon à minimiser les risques d'entrée de liquide inflammable ou enflammé dans l'entrée d'air 14.

Les extrémités des parois 6 délimitent un espace E pour le passage de l'air de l'extérieur vers l'entrée 14.

Comme dans le mode de réalisation précédent, les parois inclinées 6 constituent des moyens permettant d'empêcher l'écoulement du fluide vers l'entrée d'air 14. Le liquide qui s'écoule sur le volet est en effet conduit à distance de l'entrée 14 par les parois 6

Selon ce mode particulier de réalisation, les moyens permettant d'empêcher l'écoulement du fluide vers l'entrée d'air 14 comprennent également des déflecteurs 16 disposés à la base de la cheminée 15 et qui sont des plaques inclinées par rapport à la paroi 1a du véhicule. En effet avec un tel type d'entrée d'air 14, le liquide qui s'écoule sur la paroi la risquerait de venir vers l'entrée d'air qui se situe au niveau de la paroi 1a (ce qui n'était pas le cas avec les grilles 5 du mode précédent, surélevées par rapport à la paroi la).

Les déflecteurs 16 sont réalisés sous la forme de profilés qui entourent la base de la cheminée 15. On pourra par exemple réaliser les déflecteurs 16 sous la forme d'une seule tôle emboutie entourant complètement la cheminée 15 et fixée à la paroi la par des vis 17.

Ainsi, lorsque du liquide enflammé s'écoule sur la paroi 1a, il est arrêté par le déflecteur 16 et ne peut pénétrer dans l'entrée d'air 14.

Comme dans les modes de réalisation précédent, le volet 4 est fixé au véhicule 1 à l'aide de sangles 8.

Le volet sera là encore réalisé de façon préférée en matière plastique et le déflecteur sera réalisé en métal. Les déflecteurs 16 pourront rester en place après démontage du volet 4.

## Revendications

1. Dispositif de protection (3) d'un véhicule (1) contre les projections de fluides enflammés ou inflammables, dispositif comportant, d'une part au moins un volet (4, 4a, 4b, 4c) assurant la couverture d'une entrée d'air (5, 14) du véhicule, volet disposé à distance de l'entrée d'air (5, 14) et ménageant un espace (E) pour le passage de l'air, et d'autre part des moyens (6, 16) permettant d'empêcher l'écoulement du fluide vers l'entrée d'air (5,14), les moyens (6,16) permettant d'empêcher l'écoulement du fluide vers l'entrée d'air (5,14) comprenant au moins une paroi latérale (6) solidaire du volet (4, 4a, 4b, 4c) et dont le rebord externe (6a) se trouve à distance de l'entrée d'air (5,14), dispositif **caractérisé en ce que** la paroi latérale (6) est inclinée d'un angle inférieur à 90° par rapport au volet (4) de façon à favoriser un écoulement du liquide à distance de l'entrée d'air (5,14).

2. Dispositif de protection d'un véhicule selon la revendication 1, **caractérisé en ce que** le volet (4, 4a, 4b, 4c) comporte des pieds latéraux positionnés à distance de l'entrée d'air (5) et délimitant au moins un canal (7) pour le passage de l'air.

3. Dispositif de protection d'un véhicule selon la revendication 2, **caractérisé en ce que** les pieds sont solidaires des parois latérales (6), le canal de passage pour l'air étant formé par au moins un ajourage (7) réalisé sur chaque paroi inclinée (6).

4. Dispositif de protection d'un véhicule selon une des revendications 2 ou 3, **caractérisé en ce que** le volet (4, 4a, 4b, 4c) couvrant une entrée d'air (5) est constitué par au moins deux panneaux (4a, 4b, 4c) pouvant être positionnés l'un par rapport à l'autre de façon à assurer un masquage complet ou partiel de l'entrée d'air (5).

5. Dispositif de protection d'un véhicule selon la revendication 1, adapté à une entrée d'air (14) située latéralement sur une cheminée (15) disposée en saillie par rapport à une paroi (1a) du véhicule, **caractérisé en ce que** le volet (4) est solidaire du sommet de la cheminée (15) et comporte une ou des parois latérales inclinées (6) qui l'entourent complètement tout en ménageant un espace (E) pour le passage de l'air, les moyens permettant d'empêcher l'écoulement du fluide vers l'entrée d'air (14) comprenant par ailleurs des déflecteurs (16) disposés à la base de la cheminée (15).

6. Dispositif de protection d'un véhicule selon la revendication 5, **caractérisé en ce que** les déflecteurs (16) sont réalisés sous la forme de profilés entourant la base de la cheminée (15).

7. Dispositif de protection d'un véhicule selon une des revendications 1 à 6, **caractérisé en ce que** le volet (4, 4a, 4b, 4c) et ses parois latérales (6) sont réalisés en une matière plastique.

8. Dispositif de protection d'un véhicule selon la revendication 7, **caractérisé en ce que** le volet (4, 4a, 4b, 4c) comporte au moins une zone transparente.

9. Dispositif de protection d'un véhicule selon une des revendications 1 à 8, **caractérisé en ce que** le volet (4, 4a, 4b, 4c) est rendu solidaire du véhicule par un moyen de fixation par sangles (8).

## Claims

1. A device (3) to protect a vehicle (1) against projections of flaming or flammable fluids, device incorporating, firstly, at least one shutter (4, 4a, 4b, 4c) to cover an air inlet (5, 14) of the vehicle, shutter arranged at a distance from the air inlet (5, 14) and allowing a space (E) for the passage of air, and secondly, means (6, 16) to prevent the flow of fluid towards the air inlet (5, 14), the means (6, 16) to prevent the flow of fluid towards the air inlet (5, 14) comprising at least one lateral wall (6) integral with the shutter (4, 4a, 4b, 4c) and whose external edge (6a) lies at a distance from the air inlet (5, 14), device **characterized in that** the lateral wall (6) is inclined at an angle of less than 90° with respect to the shutter (4) so as to guide the liquid to flow away from the air inlet (5, 14).

2. A vehicle protection device according to Claim 1, **characterized in that** the shutter (4, 4a, 4b, 4c) incorporates lateral feet positioned at a distance from the air inlet (5) and delimiting at least one channel (7) for the passage of air.

3. A vehicle protection device according to Claim 2, **characterized in that** the feet are integral with the lateral walls (6), the channel providing an air passage being formed by at least one piercing (7) made in each inclined wall (6).

4. A vehicle protection device according to one of Claims 2 or 3, **characterized in that** the shutter (4, 4a, 4b, 4c) covering an air inlet (5) is constituted by at least two panels (4a, 4b, 4c) able to be positioned with respect to one another so as to ensure the complete or partial masking of the air inlet (5).

5. A vehicle protection device according to Claim 1, adapted to an air inlet (14) located laterally on a chimney (15) arranged to protrude with respect to a wall (1a) of the vehicle, **characterized in that** the shutter (4) is integral with the top of the chimney (15) and incorporates one or several inclined lateral walls (6) which completely surround it whilst leaving a space (E) for the passage of air, the means to prevent the fluid from flowing towards the air inlet (14) further comprising deflectors (16) arranged at the base of the chimney (15).

6. A vehicle protection device according to Claim 5, **characterized in that** the deflectors (16) are made in the form of profiled sections surrounding the base of the chimney (15).

7. A vehicle protection device according to one of Claims 1 to 6, **characterized in that** the shutter (4, 4a, 4b, 4c) and its lateral walls (6) are made of a plastic material.

8. A vehicle protection device according to Claim 7, **characterized in that** the shutter (4, 4a, 4b, 4c) incorporates at least one transparent area.

9. A vehicle protection device according to one of Claims 1 to 8, **characterized in that** the shutter (4, 4a, 4b, 4c) is made integral with the vehicle by fastening means comprising straps (8).

## Patentansprüche

1. Vorrichtung zum Schutz (3) eines Fahrzeugs (1) gegen Spritzer von in Brand gesetzten oder in Brand setzbaren Fluiden, wobei die Vorrichtung einerseits wenigstens eine Klappe (4, 4a, 4b, 4c), welche die Abdeckung eines Lufteinlasses (5, 14) des Fahrzeugs gewährleistet, wobei die Klappe vom Lufteinlass (5, 14) beabstandet angeordnet ist und einen Raum (E) für den Durchlass der Luft bewerkstelligt, und andererseits Mittel (6, 16) umfasst, die es ermöglichen, den Fluss des Fluids zum Lufteinlass (5, 14) zu verhindern, wobei die Mittel(6, 16), welche es ermöglichen, den Fluss des Fluids zum Lufteinlass (5, 14) zu verhindern, wenigstens eine seitliche Wand (6) umfassen, die fest mit der Klappe (4, 4a, 4b, 4c) verbunden ist und deren äußere Kante (6a) sich beabstandet vom Lufteinlass (5, 14) befindet, wobei die Vorrichtung **dadurch gekennzeichnet ist, dass** die seitliche Wand (6) um einen Winkel von kleiner als 90° in Bezug auf die Klappe (4) derartig geneigt ist, dass ein vom Lufteinlass (5, 14) beabstandetes Abfließen der Flüssigkeit begünstigt wird.

2. Vorrichtung zum Schutz eines Fahrzeugs nach Anspruch 1, **dadurch gekennzeichnet, dass** die Klappe (4, 4a, 4b, 4c) seitliche Füße umfasst, welche vom Lufteinlass (5) beabstandet angeordnet sind und wenigstens einen Kanal (7) zum Durchlass von Luft abgrenzen.

3. Vorrichtung zum Schutz eines Fahrzeugs nach Anspruch 2, **dadurch gekennzeichnet, dass** die Füße fest mit den seitlichen Wänden (6) verbunden sind, wobei der Durchlasskanal für die Luft von wenigstens einer an jeder geneigten Wand (6) ausgeführten seitlichen Ausnehmung (7) gebildet wird.

4. Vorrichtung zum Schutz eines Fahrzeugs nach einem der Ansprüche 2 oder 3, **dadurch gekennzeichnet, dass** die einen Lufteinlass (5) abdeckende Klappe (4, 4a, 4b, 4c) von wenigstens zwei Platten (4a, 4b, 4c) gebildet wird, welche derartig zueinander angeordnet werden können, dass eine vollständige oder teilweise Verhüllung des Lufteinlasses (5) gewährleistet wird.

5. Vorrichtung zum Schutz eines Fahrzeugs nach Anspruch 1, die an einen Lufteinlass (14) angepasst ist, welcher seitlich an einem Kamin (15) angeordnet ist, der in Bezug auf eine Wand (1a) des Fahrzeugs vorspringend angeordnet ist, **dadurch gekennzeichnet, dass** die Klappe (4) fest mit dem Scheitel des Kamins (15) verbunden ist und eine oder seitlich geneigte Wände (6) umfasst, welche ihn vollständig umgeben, wobei noch ein Raum (E) für den Durchlass der Luft bewerkstelligt wird, wobei die Mittel, welche es ermöglichen, den Fluss des Fluids zum Lufteinlass (14) zu verhindern, außerdem Abweiser (16) umfassen, die am Fuß des Kamins (15) angeordnet sind.

6. Vorrichtung zum Schutz eines Fahrzeugs nach Anspruch 5, **dadurch gekennzeichnet, dass** die Abweiser (16) in der Form von Profilen ausgeführt sind, welche den Fuß des Kamins (15) umgeben.

7. Vorrichtung zum Schutz eines Fahrzeugs nach einem der Ansprüche 1 bis 6, **dadurch gekennzeichnet, dass** die Klappe (4, 4a, 4b, 4c) und deren seitliche Wände (6) aus einem Kunststoff hergestellt sind.

8. Vorrichtung zum Schutz eines Fahrzeugs nach Anspruch 7, **dadurch gekennzeichnet, dass** die Klappe (4, 4a, 4b, 4c) wenigstens eine transparente Zone umfasst.

9. Vorrichtung zum Schutz eines Fahrzeugs nach einem der Ansprüche 1 bis 8, **dadurch gekennzeichnet, dass** die Klappe (4, 4a, 4b, 4c) durch ein Befestigungsmittel mit Bändern (8) fest mit dem Fahrzeug verbunden ist.
